(19) Europäisches Patentamt
European Patent Office
Office européen des brevets

(11) EP 4 235 851 B1

(12) **EUROPEAN PATENT SPECIFICATION**

(45) Date of publication and mention of the grant of the patent:
**16.09.2026 Bulletin 2026/38**

(21) Application number: **22874230.0**

(22) Date of filing: **20.05.2022**

(51) International Patent Classification (IPC):
***H01M 10/0567*** (2010.01) ***H01M 10/0525*** (2010.01)
***H01M 10/42*** (2006.01) ***H01M 4/133*** (2010.01)
*H01M 4/02* (2006.01) *H01M 4/131* (2010.01)
*H01M 10/0568* (2010.01)

(52) Cooperative Patent Classification (CPC):
**H01M 10/0567; H01M 4/133; H01M 10/0525; H01M 10/4235;** H01M 4/131; H01M 10/0568; H01M 2300/0025; Y02E 60/10

(86) International application number:
**PCT/CN2022/094119**

(87) International publication number:
**WO 2023/050832 (06.04.2023 Gazette 2023/14)**

(54) **LITHIUM ION BATTERY, BATTERY MODULE, BATTERY PACK, AND ELECTRICAL DEVICE**

LITHIUM-IONEN-BATTERIE, BATTERIEMODUL, BATTERIEPACK UND ELEKTRISCHE VORRICHTUNG

BATTERIE AU LITHIUM-ION, MODULE DE BATTERIE, BLOC-BATTERIE ET DISPOSITIF ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 CN 202111159457**

(43) Date of publication of application:
**30.08.2023 Bulletin 2023/35**

(73) Proprietor: **Contemporary Amperex Technology (Hong Kong) Limited**
**Central, Central And Western District (HK)**

(72) Inventors:
- **WU, Zeli**
  **Ningde, Fujian 352100 (CN)**
- **HAN, Changlong**
  **Ningde, Fujian 352100 (CN)**
- **ZHANG, Cuiping**
  **Ningde, Fujian 352100 (CN)**
- **HUANG, Lei**
  **Ningde, Fujian 352100 (CN)**
- **GUO, Jie**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(56) References cited:
**CN-A- 108 140 890**
**CN-A- 111 333 595**
**CN-A- 111 628 218**
**CN-A- 111 697 266**
**CN-A- 111 934 014**
**CN-A- 112 151 749**
**CN-A- 113 363 580**
**CN-A- 113 437 363**
**JP-A- 2007 172 990**
**US-A1- 2016 126 592**
**US-A1- 2020 303 767**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Cross-Reference to Related Applications

The present application claims the priority of Chinese Patent Application No. 202111159457.3 filed on 30 September 2021 and titled "LITHIUM-ION BATTERY, BATTERY MODULE, BATTERY PACK, AND ELECTRICAL DEVICE".

### Technical Field

The present application relates to the field of batteries, and specifically relates to a lithium-ion battery, a battery module, a battery pack, and an electrical device.

### Background Art

As a secondary battery, a lithium-ion battery works mainly relying on movement of lithium ions between a positive electrode and a negative electrode. During the charge and discharge process, $Li^+$ intercalates and deintercalates back and forth between the two electrodes: during charging, $Li^+$ deintercalates from the positive electrode, intercalates through the electrolyte into the negative electrode, and the negative electrode is in a lithium-rich state; while the opposite is true during discharging.

An electrolyte solution is a carrier of ion transmission in the lithium-ion battery, serves to conduct ions between the positive electrode and the negative electrode of the lithium-ion battery, and is the guarantee for high-voltage, high-specific-energy performance and the like of the lithium-ion battery. The electrolyte solution is generally prepared from a high-purity organic solvent, an electrolyte lithium salt, a necessary additive, and other raw materials under certain conditions and in a certain proportion.

At present, lithium-ion batteries have been widely used in high-tech products such as automobiles and mobile phones. However, with the continuous expansion of the application field of lithium-ion batteries, power performance and cycle life of the batteries still remain to be further improved.

CN111 934 014 A, CN 111 333 595 A, US 2016/126592 A1, CN 113 363 580 A, CN 113 437 363 A and CN 108 140 890 A all refer to the use of acesulfamate salts as additive in electrolyte compositions for lithium secondary batteries.

US 2020/303767 A1, CN 112 151 749 A and CN 111 628 218 A all describe lithium secondary batteries with an anode active material having a specific surface area which is selected in a prescribed range.

### Summary of the Invention

In view of the problems existing in the Background Art, the present application provides a lithium-ion battery, a battery module, a battery pack, and an electrical apparatus.

In a first aspect, the present application provides a lithium-ion battery, comprising a positive electrode sheet, a negative electrode sheet, a separator between the positive electrode sheet and the negative electrode sheet, and an electrolyte solution. The electrolyte solution comprises an organic solvent, an electrolyte lithium salt dissolved in the organic solvent, and also one or more of additives shown in formula (I),

(I)

wherein R is selected from the group consisting of K, Li, Na, Rb, or Cs, $R_1$ is selected from C1-C10 alkyl; and a percentage mass content of the additives shown in formula (I) in the electrolyte solution is denoted as $W_0$%. The negative electrode sheet comprises a negative electrode current collector and a negative electrode active material layer arranged on at least one surface of the negative electrode current collector, and a specific surface area of a negative electrode active material in the negative electrode active material layer is denoted as $X_1$, in $m^2/g$; satisfying: $W_0/X_1$=0.1-10; and optionally, $W_0/X_1$=0.2-4.

As researched and validated by the inventor of the present application, the electrolyte solution comprising the additives shown in formula (I) is applied to the lithium-ion battery, and the additives shown in formula (I) are first reduced to a film on a surface of a negative electrode of the lithium-ion battery, forming an interfacial film with low impedance and high

ion transmission capacity. This interfacial film serves to protect the negative electrode, and contributes to improving power performance, cycling performance, and service life of the battery. The inventor holds that: within the lithium-ion battery, various reactions occur on surfaces of electrodes, so that physical and chemical properties of a positive electrode active material and the negative electrode active material affect reaction characteristics on a surface of a positive electrode and the surface of the negative electrode within the lithium-ion battery. A ratio of a percentage mass content $W_0$ of the additives shown in formula (I) in the electrolyte solution to a specific surface area $X_1$ of the negative electrode active material is defined within a reasonable range, such that the additives shown in formula (I) form a homogeneous and stable protective film on the surface of the negative electrode of the lithium-ion battery, to guarantee improvement of the cycling performance and power performance of the lithium-ion battery.

In some optional embodiments, in the lithium-ion battery provided in the present application, the positive electrode sheet comprises a positive electrode current collector and a positive electrode active material layer arranged on at least one surface of the positive electrode current collector, and a specific surface area of the positive electrode active material in the negative electrode active material layer is denoted as $X_2$, $m^2/g$; satisfying: $X_2/W_0$=0.4-5; and optionally, $X_2/W_0$=0.6-3.

A ratio of the specific surface area $X_2$ of the positive electrode active material to the percentage mass content $W_0$ of the additives shown in formula (I) is defined within a reasonable range, such that reaction and consumption of the additives shown in formula (I) on a surface of a positive electrode of the lithium-ion battery are within a reasonable range, thereby guaranteeing improvement of comprehensive performance of the lithium-ion battery.

In some optional embodiments, the percentage mass content $W_0$% of the additives shown in formula (I) in the electrolyte solution is from 0.1% to 2%, and optionally, $W_0$% is from 0.3% to 1%.

When an addition amount of the additives shown in formula (I) in the electrolyte solution is very small, it is not enough to form a stable interfacial film on the surface of the negative electrode of the lithium-ion battery; and when the addition amount of the additives shown in formula (I) in the electrolyte solution is very large, gas production of the lithium-ion battery can be aggravated. Moreover, the additives shown in formula (I) will also increase viscosity of the electrolyte solution, thereby affecting conductivity of the electrolyte solution. In this regard, the present application further provides a range of the percentage mass content of the additives shown in formula (I) in the electrolyte solution, such that the additives shown in formula (I) are substantially first consumed at the negative electrode of the lithium-ion battery, and are enough to form a homogeneous and stable interfacial film, to protect the negative electrode, fully function to improve low-temperature cycle and power performance of the lithium-ion battery; and weaken adverse effects thereof on the conductivity of the electrolyte solution.

In some optional embodiments, in the lithium-ion battery provided in the present application, R is K, and $R_1$ is methyl in the structure of formula (I).

In some optional embodiments, in the lithium-ion battery provided in the present application, a percentage mass content of the electrolyte lithium salt in the electrolyte solution is denoted as $W_1$%, satisfying: $W_1\%\geq 5W_0$. Optionally, in the lithium-ion battery provided in the present application, the percentage mass content $W_1$% of the electrolyte lithium salt in the electrolyte solution is from 10% to 15%.

The addition of the additives shown in formula (I) increases the viscosity of the electrolyte solution, which is not beneficial for the conductivity of the electrolyte solution, and can further affect dynamic characteristics of the lithium-ion battery. The electrolyte lithium salt in the electrolyte solution can improve the conductivity of the electrolyte solution, and can reduce concentration polarization. Therefore, a reasonable addition amount of the additives shown in formula (I) is also affected by a concentration and a use amount of the lithium salt. In the electrolyte solution provided in the present application, when the percentage mass content of the additives shown in formula (I) is less than or equal to 1/5 percentage mass content of the electrolyte lithium salt, i.e., when $W_1\geq 5W_0$, or $W_1$%=10%-15%, the electrolyte lithium salt can efficiently alleviate deterioration of the viscosity of the electrolyte solution caused by the addition of the additives shown in formula (I), such that the viscosity and conductivity of the electrolyte solution are in a favorable range.

In some optional embodiments, in the lithium-ion battery provided in the present application, the electrolyte solution further comprises a positive electrode sacrificing additive, an oxidation potential of the positive electrode sacrificing additive is lower than 4.5 V; and optionally, the oxidation potential of the positive electrode sacrificing additive is lower than 4.3 V.

As mentioned above, the additives shown in formula (I) can priorly form a film on the surface of the negative electrode of the lithium-ion battery, thereby improving the power performance, cycling performance, and service life of the battery. However, the additives shown in formula (I) have no effects on improving the gas production of the lithium-ion battery, and will also aggravate gas production during storage to a certain extent due to their own poor oxidation resistance. In this regard, the inventor of the present application presents that the positive electrode sacrificing additive is also added in the electrolyte solution provided in the present application. The positive electrode sacrificing additive can priorly form a film on the surface of the positive electrode, thereby improving the gas production of the lithium-ion battery.

Further, the oxidation potential of the positive electrode sacrificing additive added in the electrolyte solution in the present application may be lower than 4.5 V, and optionally lower than 4.3 V. The inventor of the present application finds

that the oxidation potential of the additives shown in formula (I) is low, and the additives will, when being oxidized, produce a large amount of gases, which is not beneficial for storage performance of the lithium-ion battery. Further, this situation is obvious when the battery is charged to more than 4.2 V, and is particularly more obvious when the battery is charged to more than 4.4 V. Therefore, when the oxidation potential of the positive electrode sacrificing additive added in the electrolyte situation is lower than 4.5 V, and optionally lower than 4.3 V, the positive electrode sacrificing additive can be guaranteed to form a film prior to the additives shown in formula (I) and the solvent, thereby favorably inhibiting occurrence of the gas production, and improving the storage performance of the lithium-ion battery.

In some optional embodiments, the lithium-ion battery provided in the present application, the positive electrode sacrificing additive is selected from compounds shown in one of formula (II) to formula (IV):

(II) , (III) , or (IV)

wherein $R_2$ is selected from a carbon atom or alkylene substituted with C1-C9 alkyl.

In some optional embodiments, in the lithium-ion battery provided in the present application, a percentage mass content of the positive electrode sacrificing additive in the electrolyte solution is denoted as $W_2$%, satisfying: $0.5\% \leq W_2 \leq 4\%$; optionally, $W_2 \leq 3W_0$; and further optionally, $W_2 \leq 2W_0$.

When the percentage mass content $W_2$% of the positive electrode sacrificing additive in the electrolyte solution satisfies $0.5\% \leq W_2 \leq 4\%$, the positive electrode sacrificing additive can favorably improve the gas production problem of the lithium-ion battery, and improve the gas production of lithium ions. However, the positive electrode sacrificing additive will have adverse effects on both power and service life of the lithium-ion battery. In order to avoid occurrence of the above adverse effects, the percentage mass content of the positive electrode sacrificing additive in the electrolyte solution is most preferably not higher than 3 times as much as the percentage mass content of the additives shown in formula (I) in the electrolyte solution; and further optionally, the percentage mass content of the positive electrode sacrificing additive in the electrolyte solution is most preferably not higher than 2 times as much as the percentage mass content of the additives shown in formula (I) in the electrolyte solution, thereby maintaining favorable power and service life of the lithium-ion battery.

In a second aspect, the present application provides a battery module, comprising the lithium-ion battery in the first aspect of the present application.

In a third aspect, the present application provides a battery pack, comprising the lithium-ion battery in the first aspect of the present application or the battery module in the second aspect of the present application.

In a fourth aspect, the present application provides an electrical apparatus, comprising the lithium-ion battery in the first aspect of the present application, the battery module in the second aspect of the present application, or the battery pack in the third aspect of the present application; where the lithium-ion battery or the battery module or the battery pack serves as a power source or an energy storage unit of the electrical apparatus.

## Description of Drawings

Fig. 1 is a reduction potential diagram of an example electrolyte solution;
Fig. 2 is a reduction potential diagram after addition of 0.5% (percentage mass content) of an additive of formula (I-1) in the example electrolyte solution;
Fig. 3 is a linear sweep voltammetric curve of the example electrolyte solution;
Fig. 4 is a linear sweep voltammetric curve after addition of 0.5% (percentage mass content) of the additive of formula (I-1) in the example electrolyte solution;
Fig. 5 is a space diagram of a lithium-ion battery in a specific embodiment of the present application;
Fig. 6 is an exploded view of the lithium-ion battery shown in Fig. 5;
Fig. 7 is a space diagram of a battery module in a specific embodiment of the present application;
Fig. 8 is a space diagram of a battery pack in a specific embodiment of the present application;
Fig. 9 is an exploded view of the battery pack shown in Fig. 8; and
Fig. 10 is a schematic diagram of an electrical apparatus in a specific embodiment of the present application.

Description of reference numerals:

1. Battery pack;
2. Upper box body;
3. Lower box body;
4. Battery module;
5. Lithium-ion battery;
51. Case;
52. Electrode assembly; and
53. Top cover assembly.

## Detailed Description

The present application will be further described below with reference to specific embodiments. It should be understood that these specific embodiments are provided merely to illustrate the present application, rather than limiting the scope of the present application.

## Electrolyte solution

The first aspect of the present application provides a lithium-ion battery, comprising a positive electrode sheet, a negative electrode sheet, a separator between the positive electrode sheet and the negative electrode sheet, and an electrolyte solution. The electrolyte solution comprises an organic solvent, an electrolyte lithium salt dissolved in the organic solvent, and one or more of additives shown in formula (I),

(I)

where R is selected from the group consisting of K, Li, Na, Rb, or Cs, $R_1$ is selected from C1-C10 alkyl; and a percentage mass content of the additives shown in formula (I) in the electrolyte solution is denoted as $W_0$%, the negative electrode sheet comprises a negative electrode current collector and a negative electrode active material layer arranged on at least one surface of the negative electrode current collector, and a specific surface area of a negative electrode active material in the negative electrode active material layer is denoted as $X_1$, $m^2/g$; satisfying: $W_0/X_1$=0.1-50; and optionally, $W_0/X_1$=0.2-10.

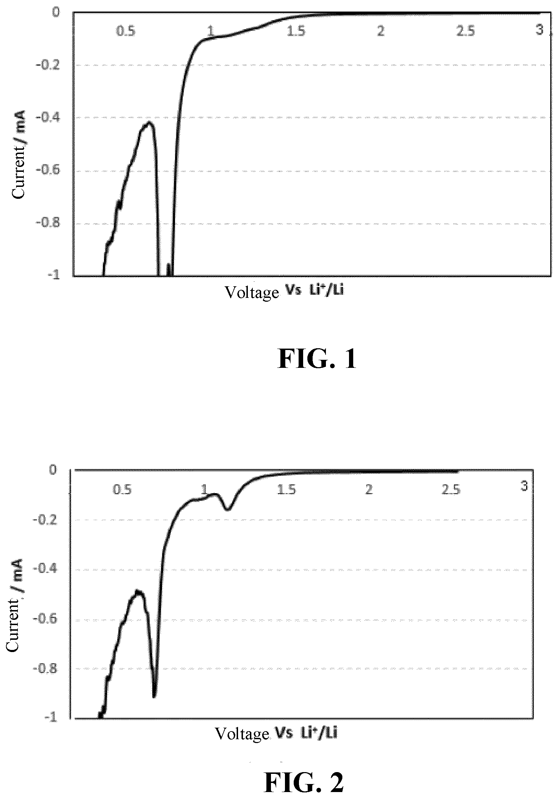

The inventor finds that the electrolyte solution comprising the additives shown in formula (I) is applied to the lithium-ion battery, and the additives shown in formula (I) are first reduced to a film on a surface of a negative electrode of the lithium-ion battery, forming an interfacial film with low impedance and high ion transmission capacity. This interfacial film serves to protect the negative electrode, and contributes to improving power performance and cycling performance of the battery. Fig. 1 is a reduction potential diagram of an example electrolyte solution (test condition: 0.5 mV/s@25 °C); and Fig. 2 is a reduction potential diagram after addition of 0.5% (percentage mass content) of an additive of formula (I-1) in the example electrolyte solution (test condition: 0.5 mV/s@25 °C). The example electrolyte solution may be: an electrolyte solution of $LiPF_6$ at a percentage mass content of 12.5% prepared with a solvent of EC: EMC: DEC=30:50:30 as a mother solution. As can be seen from comparison between Fig. 1 and Fig. 2, after addition of the additive of formula (I-1), there is an obvious small peak at about 1.2 V on a reduction curve of the electrolyte solution, and this small peak is a reduction peak of the additive; however, this reduction peak does not arise in the reduction curve of the electrolyte solution without addition of the additive of formula (I-1). At the same time, the reduction peak of the solvent at about 0.7 V is inhibited to a certain extent due to film formation of the additive of formula (I-1). This proves that not only can such additives be first reduced on the surface of the negative electrode prior to the solvent, but also reduction products thereof can inhibit reduction of the solvent, thereby improving power performance and cycling performance of the battery performance.

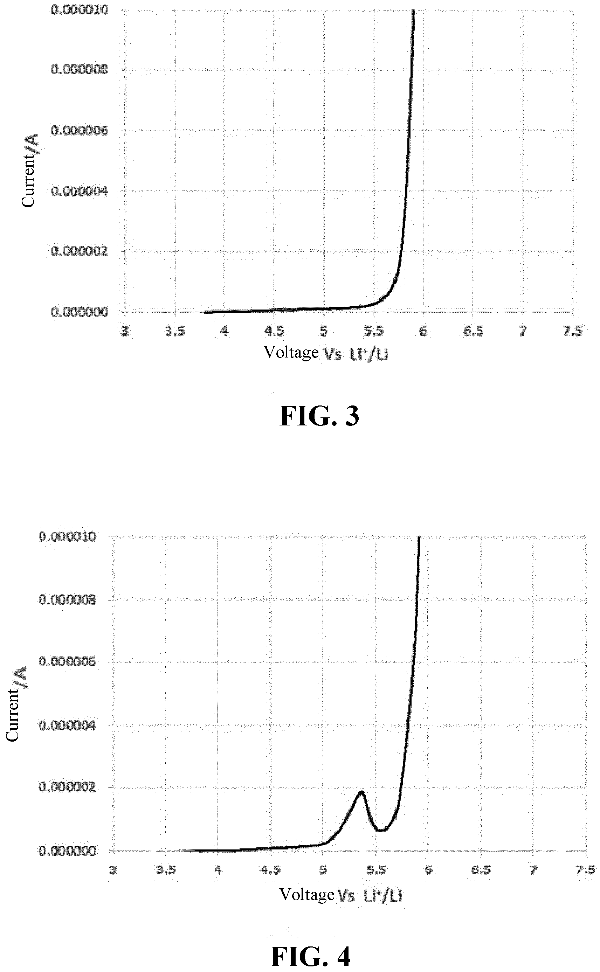

In addition, Fig. 3 is a linear sweep voltammetric curve of the example electrolyte solution (test condition: 0.5 mV/s@25 °C); and Fig. 4 is a linear sweep voltammetric curve after addition of 0.5% (percentage mass content) of the additive of formula (I-1) in the basic electrolyte solution (test condition: 0.5 mV/s@25 °C). The example electrolyte solution may be: an electrolyte solution of $LiPF_6$ at a percentage mass content of 12.5% prepared with a solvent of EC: EMC:

DEC=30:50:30 as a mother solution. As can be seen from comparison between Fig. 3 and Fig. 4, after addition of the additive of formula (I-1), the linear sweep voltammetric curve of the electrolyte solution has an obvious oxidation peak at about 5 V, i.e., an oxidation peak of the additive of formula (I-1), such that the additive of formula (I-1) is more easily oxidized at a positive electrode than the solvent, and the formed oxidation film cannot inhibit further oxidation of the solvent at the positive electrode. Therefore, application of the additive of formula (I-1) to the electrolyte solution of the lithium-ion battery may aggravate gas production during storage of the lithium-ion battery.

In this regard, the inventor holds that: within the lithium-ion battery, various reactions occur on surfaces of electrodes, so that physical and chemical properties of a positive electrode active material and a negative electrode active material affect reaction characteristics on a surface of the positive electrode and a surface of a negative electrode within the lithium-ion battery. A ratio of a percentage mass content of the additives shown in formula (I) to a specific surface area $X_1$ of the negative electrode active material is defined within a reasonable range, such that the additives shown in formula (I) form a more stable protective film on the surface of the negative electrode of the lithium-ion battery, to better improve power performance and cycling performance of the lithium-ion battery.

Specifically, in an embodiment of the present invention, $W_0/X_1$=0.1-50; and optionally, $W_0/X_1$=0.2-10. When the ratio of $W_0/X_1$ is very large, the content of the additives shown in formula (I) in the electrolyte solution is relatively very high, and a specific surface area of the negative electrode is relatively small, thereby resulting in formation of a very thick protective film on the surface of the negative electrode, causing difficulties in lithium ion transmission, and failing to contribute to improvement of the cycling performance and power performance of the battery. When the ratio of $W_0/X_1$ is very small, the content of the additives shown in formula (I) in the electrolyte solution is relatively very low, such that the surface of the negative electrode of the lithium-ion battery is not enough to form a homogeneous and stable interfacial film, the negative electrode is less sufficiently protected, it is difficult to inhibit reduction of the solvent on the surface of the negative electrode, and it is also impossible to effectively improve the cycling performance and power performance of the lithium-ion battery.

In some embodiments, the positive electrode comprises a positive electrode current collector and a positive electrode active material layer arranged on at least one surface of the positive electrode current collector, a specific surface area of the positive electrode active material in the negative electrode active material layer is denoted as $X_2$, $m^2/g$, and the lithium-ion battery can satisfy: $X_2/W_0$=0.1-34; and optionally, $X_2/W_0$=0.5-17.

A ratio of the specific surface area $X_2$ of the positive electrode active material to the percentage mass content of the additives shown in formula (I) is defined within a reasonable range, such that consumption of the additives shown in formula (I) on the surface of the positive electrode of the lithium-ion battery is within a reasonable range. Specifically, when $X_2/W_0$ is very large, there is a relatively large amount of the positive electrode active material, and the content of the additives shown in formula (I) is relatively low. In this case, a reaction interface of the positive electrode is large, and the consumption of the additives shown in formula (I) is large, such that too many additives shown in formula (I) are consumed on the surface of the positive electrode, which is not beneficial for a film-forming reaction of the additives shown in formula (I) at the negative electrode. When $X_2/W_0$ is very small, there is a relatively small amount of the positive electrode active material, and the content of the additives shown in formula (I) is relatively high. Since the additives shown in formula (I) themselves are not resistant to oxidation, excessive additives shown in formula (I) will have adverse effects on viscosity and conductivity of the electrolyte solution, as well as storage performance of the lithium-ion battery.

In some embodiments, the percentage mass content $W_0$% of the additives shown in formula (I) in the electrolyte solution is from 0.1% to 2%; and further optionally, $W_0$% is from 0.3% to 1%.

When an addition amount of the additives shown in formula (I) in the electrolyte solution is very small, it is not enough to form a stable interfacial film on the surface of the negative electrode of the lithium-ion battery; and when the addition amount of the additives shown in formula (I) in the electrolyte solution is very large, the gas production of the lithium-ion battery can be aggravated to a certain extent. Moreover, the additives shown in formula (I) will also increase viscosity of the electrolyte solution, thereby affecting conductivity of the electrolyte solution. In this regard, the present application further provides a range of the percentage mass content of the additives shown in formula (I) in the electrolyte solution, such that the additives shown in formula (I) are substantially first consumed at the negative electrode of the lithium-ion battery, and are enough to form a homogeneous and stable interfacial film, to protect the negative electrode, fully function to improve the cycling performance and power performance of the lithium-ion battery; and weaken adverse effects thereof on the conductivity of the electrolyte solution.

In some embodiments, the additives shown in formula (I) may be selected from, but are not limited to, structures shown in formulas (I-1) to (I-8):

(I-1) (I-2) (I-3) (I-4)

(I-5) (I-6) (I-7) (I-8)

In some embodiments, R is K and $R_1$ is methyl in the structure of formula (I); and the additives have the structure shown in formula (I-1):

(I-1)

In some embodiments, a percentage mass content of an electrolyte lithium salt in the electrolyte solution is denoted as $W_1$%, and the lithium-ion battery can satisfy: $W_1\% \geq 5W_0$.

The addition of the additives shown in formula (I) somewhat increases the viscosity of the electrolyte solution, which is not beneficial for the conductivity of the electrolyte solution, and can further affect dynamic characteristics of the lithium-ion battery. The electrolyte lithium salt in the electrolyte solution can improve the conductivity of the electrolyte solution, and can reduce concentration polarization. Therefore, a reasonable addition amount of the additives shown in formula (I) is also affected by a concentration and a use amount of the lithium salt. In some embodiments of the present application, when the percentage mass content of the additives shown in formula (I) is less than or equal to 1/5 percentage mass content of the electrolyte lithium salt, i.e., when $W_1 \geq 5W_0$, the electrolyte lithium salt can efficiently alleviate deterioration of the viscosity of the electrolyte solution caused by the addition of the additives shown in formula (I), such that the viscosity and conductivity of the electrolyte solution are in a favorable range.

In some embodiments, the percentage mass content $W_1$% of the electrolyte lithium salt in the electrolyte solution is from 10% to 15%. When $W_1$ and $W_0$ satisfy $W_1 \geq 5W_0$, and $W_1$%=10%-15%, the lithium-ion battery has favorable dynamic characteristics.

In some embodiments, the electrolyte solution of the lithium-ion battery further comprises a positive electrode sacrificing additive, an oxidation potential of the positive electrode sacrificing additive is lower than 4.5 V; and optionally, the oxidation potential of the positive electrode sacrificing additive is lower than 4.3 V.

The additives shown in formula (I) can priorly form a film on the surface of the negative electrode of the lithium-ion battery, thereby improving the power performance, cycling performance, and service life of the battery. However, the additives shown in formula (I) have no effects on improving the gas production of the lithium-ion battery, and will also aggravate gas production during storage to a certain extent due to their own poor oxidation resistance. In some embodiments of the present application, the positive electrode sacrificing additive is also added in the electrolyte solution. The positive electrode sacrificing additive can priorly form a film on the surface of the positive electrode, thereby avoiding adverse effects of the additives shown in formula (I) on the gas production during storage of the lithium-ion battery.

In some embodiments, the oxidation potential of the positive electrode sacrificing additive added in the electrolyte solution is lower than 4.5 V, and optionally lower than 4.3 V. The oxidation potential of the additives shown in formula (I) is low, and the additives will, when being oxidized, produce a large amount of gases, which is not beneficial for the storage performance. Further, this situation is obvious when the battery is charged to more than 4.2 V, and is particularly more obvious when the battery is charged to more than 4.4 V. Therefore, when the oxidation potential of the positive electrode sacrificing additive added in the electrolyte situation is lower than 4.5 V, and optionally lower than 4.3 V, the positive electrode sacrificing additive can be guaranteed to form a film prior to the additives shown in formula (I) and the solvent, thereby favorably inhibiting occurrence of the gas production, and improving the storage performance of lithium-ion

battery.

In some embodiments, the positive electrode sacrificing additive is selected from compounds shown in one of formula (II) to formula (IV):

(II) , (III) , or (IV)

wherein $R_2$ is selected from a carbon atom or alkylene substituted with C1-C9 alkyl.

In some embodiments, in the positive electrode sacrificing molecular formula, $R_2$ is optionally methylene.

In some embodiments, a percentage mass content of the positive electrode sacrificing additive in the electrolyte solution is denoted as $W_2$%, and the lithium-ion battery can satisfy: $0.5\% \leq W_2 \leq 4\%$; optionally, $W_2 \leq 3W_0$; and further optionally, $W_2 \leq 2W_0$.

When the percentage mass content $W_2$% of the positive electrode sacrificing additive in the electrolyte solution satisfies $0.5\% \leq W_2 \leq 4\%$, the positive electrode sacrificing additive can favorably improve the gas production problem of the lithium-ion battery. However, the positive electrode sacrificing additive will have adverse effects on both power and service life of the lithium-ion battery. In order to avoid occurrence of the above adverse effects, the percentage mass content of the positive electrode sacrificing additive in the electrolyte solution is most preferably not higher than 3 times as much as the percentage mass content of the additives shown in formula (I) in the electrolyte solution. Further optionally, the percentage mass content of the positive electrode sacrificing additive in the electrolyte solution is most preferably not higher than 2 times as much as the percentage mass content of the additives shown in formula (I) in the electrolyte solution, thereby maintaining favorable power and service life of the lithium-ion battery.

In addition, in an embodiment of the present application, the negative electrode active material of the lithium-ion battery may be various materials suitable for negative electrode active materials of lithium-ion batteries in the art, for example, may include, but is not limited to, a combination of one or more of graphite, soft carbon, hard carbon, carbon fiber, mesocarbon microbead, silicon-based material, tin-based material, lithium titanate, or other metals that can be alloyed with lithium. The graphite may be selected from a combination of one or more of artificial graphite, natural graphite, and modified graphite; the silicon-based material may be selected from a combination of one or more of elementary silicon, silicon-oxygen compound, silicon-carbon composite, and silicon alloy; and the tin-based material may be selected from a combination of one or more of elementary tin, tin-oxygen compound, and tin alloy.

The negative electrode current collector is usually a structure or part collecting current. The negative electrode current collector may be various materials suitable for use as negative electrode current collectors of lithium-ion batteries in the art. For example, the negative electrode current collector may include, but is not limited to, a metal foil, and more specifically, may include, but is not limited to, a copper foil. In addition, the negative electrode sheet may also be a lithium sheet.

The specific type of the positive electrode active material is not particularly limited, as long as the positive electrode active material can satisfy intercalation and deintercalation of lithium ions. The positive electrode active material may be either a material with a layered structure, such that lithium ions diffuse in a two-dimensional space, or a material with a spinel structure, such that lithium ions diffuse in a three-dimensional space. Optionally, the positive electrode active material may be selected from one or more of a lithium transition metal oxide or a compound obtained from doping a lithium transition metal oxide with other transition metals or non-transition metals or non-metals. Specifically, the positive electrode active material may be selected from one or more of a lithium-cobalt oxide, a lithium-nickel oxide, a lithium-manganese oxide, a lithium-nickel-manganese oxide, a lithium-nickel-cobalt-manganese oxide, a lithium-nickel-cobalt-aluminum oxide, or a lithium-containing phosphate of olivine structure. For example, the positive electrode active material may be $Li_qNi_xMn_yCo_1M_pO_2$, where x+y+i+p=1, q value ranges from 0.8 to 1.2, and M may be selected from one or more of Al, Mo, Cr, Ti, Ru, or Zr.

The type of the positive electrode current collector is not specifically limited, and may be selected according to actual requirements. The positive electrode current collector can usually be a layered body, and the positive electrode current collector is usually a structure or part capable of collecting current. The positive electrode current collector may be various materials suitable for use as positive electrode current collectors of electrochemical energy storage apparatuses in the art. For example, the positive electrode current collector may include, but is not limited to, a metal foil, and more specifically, may include, but is not limited to, a nickel foil and an aluminum foil.

The separator of the lithium-ion battery may be various materials suitable for separators of lithium-ion batteries in the art, for example, may include, but is not limited to, a combination of one or more of polyethylene, polypropylene,

polyvinylidene fluoride, aramid, polyethylene terephthalate, polytetrafluoroethylene, polyacrylonitrile, polyimide, polyamide, polyester, and natural fiber.

The method for preparing the lithium-ion battery should be known to those skilled in the art. For example, the positive electrode sheet, the separator, and the negative electrode sheet may each be a layered body, such that they may be cut to a target size and then sequentially stacked, or may also be winded to the target size to form a battery cell, and may be further combined with the electrolyte solution to form the lithium-ion battery.

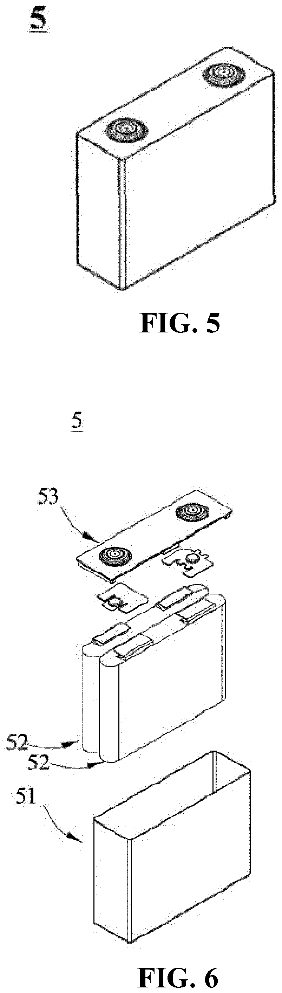

Fig. 5 is a space diagram of a lithium-ion battery in a specific embodiment of the present application, and Fig. 6 is an exploded view of the lithium-ion battery shown in Fig. 5. Referring to Fig. 5 and Fig. 6, the lithium-ion battery 5 (hereinafter referred to as battery cell 5) according to the present application comprises an outer package case 51, an electrode assembly 52, a top cover assembly 53, and an electrolyte solution (not shown). The electrode assembly 52 is accommodated within the case 51. The number of electrode assemblies 52 is not defined, and may be one or more.

It should be noted that the battery cell 5 shown in Fig. 5 is a tank-type battery, but is not limited to the tank-type battery in the present application. The battery cell 5 may be a bag-type battery, i.e., the case 51 is replaced with a metal plastic film, and the top cover assembly 53 is canceled.

**Battery module**

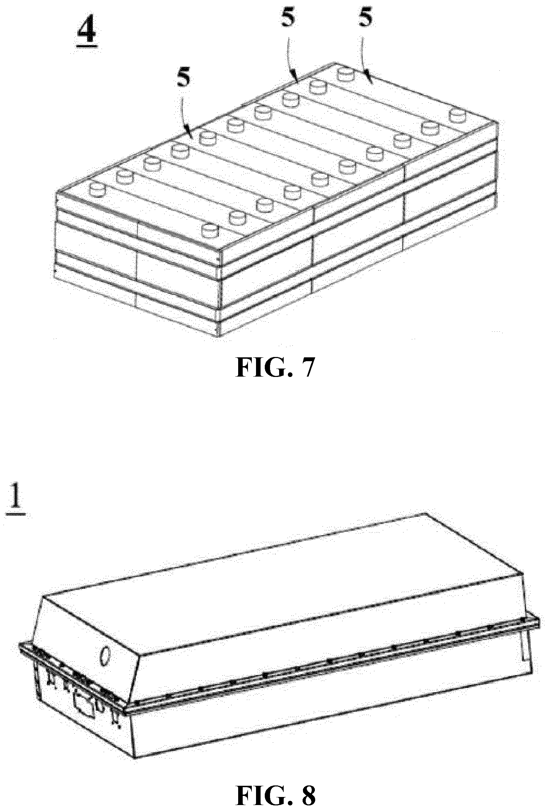

The second aspect of the present application provides a battery module, comprising the lithium-ion battery described in the first aspect of the present application. In some embodiments, the lithium-ion batteries may be assembled into a battery module, the number of lithium-ion batteries comprised in the battery module may be a plural number, and the specific number may be adjusted based on the application and capacity of the battery module. Fig. 7 is a space diagram of a battery module 4 as an example. Referring to Fig. 7, in the battery module 4, a plurality of lithium-ion batteries 5 may be sequentially arranged along a length direction of the battery module 4, and of course, may also be arranged in any other manner. The plurality of lithium-ion batteries 5 may further be fixed by fasteners. Optionally, the battery module 4 may further include a case having an accommodating space, in which the plurality of lithium-ion batteries 5 are accommodated.

**Battery pack**

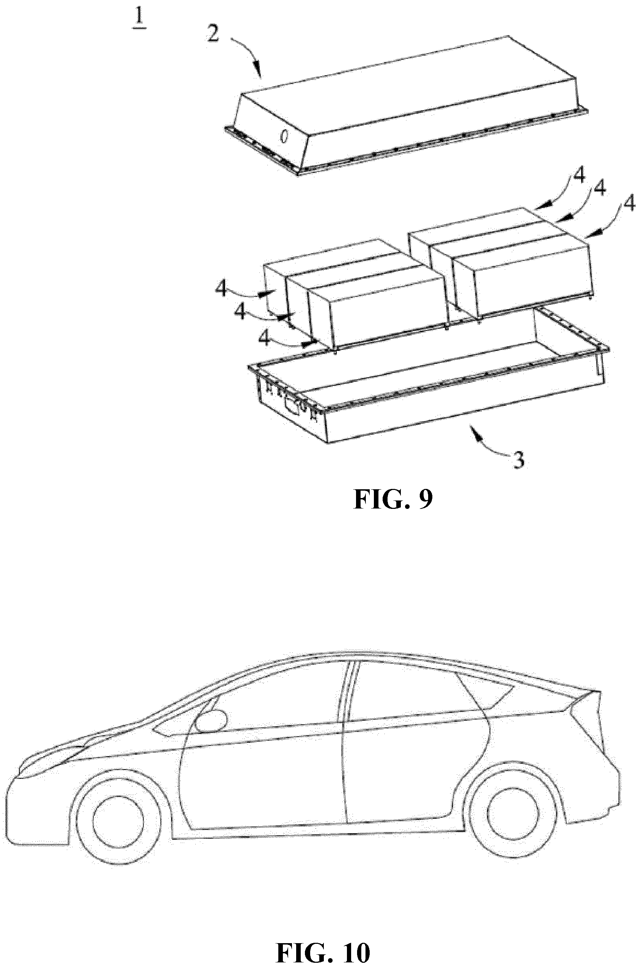

The third aspect of the present application provides a battery pack, comprising the battery module in the second aspect of the present application. In some embodiments, the battery module may be assembled into a battery pack, and the number of battery modules comprised in the battery pack may be adjusted based on the application and capacity of the battery pack. Fig. 8 is a space diagram of a battery pack 1 as an example, and Fig. 9 is an exploded view of the battery pack shown in Fig. 8. Referring to Fig. 8 and Fig. 9, the battery pack 1 may comprise a battery box and a plurality of battery modules 4 arranged in the battery box. The battery box comprises an upper box body 2 and a lower box body 3. The upper box body 2 is capable of covering the lower box body 3 and form an enclosed space for accommodating the battery module 4. The plurality of battery modules 4 may be arranged in the battery box in any manner.

**Electrical apparatus**

The fourth aspect of the present application provides an electrical apparatus, comprising the lithium-ion battery in the first aspect of the present application, or the battery module in the second aspect of the present application, or the battery pack in the third aspect of the present application. The lithium-ion battery, or the battery module, or the battery pack may be used as a power source of the electrical apparatus, or an energy storage unit of the electrical apparatus. The electrical apparatus may be, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, an electric truck), an electric train, a ship, a satellite, an energy storage system, etc.

The lithium-ion battery, the battery module, or the battery pack may be selected for the electrical apparatus according to use demand thereof.

Fig. 10 shows a schematic diagram of an electrical apparatus in a specific embodiment of the present application. The electrical apparatus may be, e.g., an all-electric vehicle, a hybrid electric vehicle, or a plug-in hybrid electric vehicle. In order to meet the requirements of the electrical apparatus for high power and high energy density of a lithium-ion battery, a battery pack or a battery module may be employed.

As another example, the electrical apparatus may be a mobile phone, a tablet, a laptop, etc. The electrical apparatus is generally required to be thin and light, and may be powered by the lithium-ion battery in the present application.

The present application will be further described below with reference to specific Embodiments. It should be understood that the illustrative Embodiments below are merely provided for exemplification, and do not constitute any limitation to the present application. Unless otherwise stated, all reagents used in the Embodiments are commercially

available or can be obtained by synthesis according to conventional methods, and can be directly used without further treatment. The experimental conditions unspecified in the Embodiments are conventional conditions or conditions recommended by material suppliers or equipment suppliers.

**Embodiments 1-25**

Preparations in Embodiments 1-25 of the present application follow the following methods and the specific parameters in Table 1.

(1) Preparation of an electrolyte solution

An organic solvent was prepared in a drying room, and then an electrolyte lithium salt, an additive shown in formula (I-1), and a positive electrode sacrificing additive were added into the organic solvent. The mixture was sufficiently mixed to obtain the electrolyte solution.

(2) Preparation of a positive electrode sheet

A positive electrode active material ($LiNi_{0.5}Co_{0.2}Mn_{0.3}O_2$(NCM523)), a conductive agent (carbon black (Super P)), and a binder (polyvinylidene fluoride (PVDF)) at a mass ratio of 96.2:2.7:1.1 were sufficiently mixed in an appropriate amount of a solvent (N-methyl pyrrolidone (NMP)), to obtain a positive electrode slurry. The positive electrode slurry was coated on a positive electrode current collector (aluminum foil), dried, cold pressed, striped, and cut, to obtain the positive electrode sheet.

(3) Preparation of a negative electrode sheet

A negative electrode active material (artificial graphite), a conductive agent (carbon black (Super P)), a binder (styrene butadiene rubber (SBR)), and sodium carboxymethyl cellulose (CMC-Na) at a mass ratio of 96.4:0.7:1.8:1.1 were sufficiently mixed in an appropriate amount of a solvent (deionized water), to obtain a negative electrode slurry. The negative electrode slurry was coated on a negative electrode current collector (copper foil), dried, cold pressed, striped, and cut, to obtain the negative electrode sheet.

(4) Separator

A PP separator of 12 $_{11}$m was used.

(5) Preparation of a lithium-ion battery

The positive electrode sheet, the separator, and the negative electrode sheet were sequentially stacked, such that the separator was located between the positive electrode sheet and the negative electrode sheet to function for separation, and then winded to obtain an electrode assembly. The electrode assembly was placed in an outer package, and the above prepared electrolyte solution was injected into a dried battery. The lithium-ion battery was obtained through the processes, such as vacuum encapsulation, standing, formation, and shaping.

**Comparative Embodiments 1-2**

The difference between Comparative Embodiments 1 and 2 and Embodiment 3 only lies in that a ratio of a percentage mass content of additives shown in formula (I) added in the electrolyte solution to a specific surface area of the negative electrode active material in Embodiment 1 is different. Embodiments 1-25 were referred to for preparation steps in Comparative Embodiments 1-2.

**Performance test of the electrolyte solution and the lithium-ion battery**

(1) Testing of low-temperature cycling performance of the lithium-ion battery

At 10 °C, the battery was charged to 4.25 V at a constant current of 0.3 C, then charged to a current of 0.05 C at a constant voltage of 4.25 V, laid aside for 5 min, and then discharged to 2.5 V at a constant current of 0.5 C. The resulting capacity was denoted as an initial capacity $C_0$. The above steps were repeated for the same battery mentioned above, and counting was started simultaneously. A discharge capacity $C_{300}$ of the battery was recorded after 300 cycles, and a cycling

capacity retention rate of the battery after 300 cycles=$C_{300}/C_0$*100%.

(2) Testing of high-temperature cycling performance of the lithium-ion battery

At 60 °C, the battery was charged to 4.25 V at a constant current of 1 C, then charged to a current of 0.05 C at a constant voltage of 4.25 V, laid aside for 5 min, and then discharged to 2.5 V at a constant current of 1 C. The resulting capacity was denoted as an initial capacity $C_0$. The above steps were repeated for the same battery mentioned above, and counting was started simultaneously. A discharge capacity $C_{300}$ of the battery was recorded after 300 cycles, and a cycling capacity retention rate of the battery after 300 cycles=$C_{300}/C_0$*100%.

(3) Storage test of a lithium-ion secondary battery at 60 °C

At 60 °C, the lithium-ion secondary battery was charged to 4.35 V at a constant current of 0.5 C, then charged to a current of 0.05 C at a constant voltage. In this case, thickness of the lithium-ion secondary battery was tested and denoted as $h_0$; then, the lithium-ion secondary battery was put into a thermostat at 60 °C, and taken out after 30 days of storage. The thickness of the lithium-ion secondary battery was tested, and was denoted as $h_1$. After 30 days of storage, thickness expansion rate of the lithium-ion secondary battery=$[(h_1-h_0)/h_0]\times100\%$.

(4) Power test of the lithium-ion battery

At 25 °C, the above lithium-ion battery was charged to 4.25 V at a charging rate of 1C, then charged to a current of less than 0.05 C at a constant voltage, and then discharged at a discharging rate of 1C for 30 min. In this case, a SOC of the battery was 50%, and in this case, the voltage was denoted as V1. Then, the battery was discharged at a discharging rate of 4C (corresponding current at 4C was I) for 30 sec. In this case, the voltage was denoted as V2. An initial discharge DCR (Direct Current Resistance) of the lithium-ion battery was computed following DCR=(V1-V2)/I.

**Detection results**

Composition parameters and detection results of the electrolyte solution and the lithium-ion battery in Embodiments 1-25 and Comparative Embodiments 1-2 are shown in Table 1.

Table 1

| | electrolyte solution | | | | | | negative electrode active material | positive electrode active material | battery performance test | | | |
|---|---|---|---|---|---|---|---|---|---|---|---|---|
| | additive shown in formula (I) | | electrolyte lithium salt | | positive electrode sacrificing additive | | | | | | | |
| | substituent definition | percentage mass content in electrolyte solution W0% | type | percentage mass content in electrolyte solution W1% | substituent definition | percentage mass content in electrolyte solution | $W_0/X_1$ | $X_2/W_0$ | capacity retention rate after 300 cycles at 10°C (%) | capacity retention rate after 300 cycles at 60°C (%) | thickness expansion rate of electrode sheet after storing for 30 days (%) | initial discharge (Ω) |
| Embodiment 1 | R is K, $R_1$ is methyl | 0.70% | $LiPF_6$ | 12% | / | / | 0.1 | 1.2 | 84.8 | 89.9 | 25.2 | 15.6 |
| Embodiment 2 | R is K, $R_1$ is methyl | 0.70% | $LiPF_6$ | 12% | / | / | 0.2 | 1.2 | 83.8 | 91.1 | 24.1 | 17.6 |
| Embodiment 3 | R is K, $R_1$ is methyl | 0.70% | $LiPF_6$ | 12% | / | / | 2 | 1.2 | 85.9 | 91.5 | 24 | 15.2 |
| Embodiment 4 | R is K, $R_1$ is methyl | 0.70% | $LiPF_6$ | 12% | / | / | 4 | 1.2 | 85.1 | 91.9 | 25.2 | 15.4 |
| Embodiment 5 | R is K, $R_1$ is methyl | 0.70% | $LiPF_6$ | 12% | / | / | 10 | 1.2 | 85.1 | 90.1 | 25.4 | 15.8 |
| Embodiment 6 | R is K, $R_1$ is methyl | 0.70% | $LiPF_6$ | 12% | / | / | 2 | 0.4 | 85.1 | 90.4 | 25.7 | 15.7 |
| Embodiment 7 | R is K, $R_1$ is methyl | 0.70% | $LiPF_6$ | 12% | / | / | 2 | 0.6 | 85.4 | 90.9 | 25.6 | 15.5 |
| Embodiment 8 | R is K, $R_1$ is methyl | 0.70% | $LiPF_6$ | 12% | / | / | 2 | 3.0 | 85.7 | 91.2 | 25.2 | 15.4 |
| Embodiment 9 | R is K, $R_1$ is methyl | 0.70% | $LiPF_6$ | 12% | / | / | 2 | 5.0 | 84.9 | 90.8 | 26.4 | 16.1 |
| Embodiment 10 | R is K, $R_1$ is methyl | 0.10% | $LiPF_6$ | 12% | / | / | 2 | 1.2 | 82.7 | 89.4 | 28.6 | 18.1 |
| Embodiment 11 | R is K, $R_1$ is methyl | 0.30% | $LiPF_6$ | 12% | / | / | 2 | 1.2 | 83.1 | 89.9 | 26.1 | 16.4 |
| Embodiment 12 | R is K, $R_1$ is methyl | 1.00% | $LiPF_6$ | 12% | / | / | 2 | 1.2 | 83.3 | 90.1 | 26.9 | 16.7 |
| Embodiment 13 | R is K, $R_1$ is methyl | 2.00% | $LiPF_6$ | 12% | / | / | 2 | 1.2 | 82.6 | 89.1 | 27.1 | 18 |
| Embodiment 14 | R is K, $R_1$ is methyl | 0.70% | $LiPF_6$ | 3.5% | / | / | 2 | 1.2 | 82.9 | 89.7 | 26.2 | 16.9 |
| Embodiment 15 | R is K, $R_1$ is methyl | 0.70% | $LiPF_6$ | 7% | / | / | 2 | 1.2 | 83.9 | 90.2 | 27.2 | 16.1 |
| Embodiment 16 | R is K, $R_1$ is methyl | 0.70% | $LiPF_6$ | 10% | / | / | 2 | 1.2 | 84.9 | 90.9 | 25.9 | 15.5 |
| Embodiment 17 | R is K, $R_1$ is methyl | 0.70% | $LiPF_6$ | 15% | / | / | 2 | 1.2 | 84.7 | 91.2 | 25.7 | 15.1 |
| Embodiment 18 | R is K, $R_1$ is methyl | 0.70% | $LiPF_6$ | 12% | Formula( II ),$R_2$ is methylene | 0.50% | 2 | 1.2 | 86.90 | 92.10 | 23.90 | 16.00 |
| Embodiment 19 | R is K, $R_1$ is methyl | 0.70% | $LiPF_6$ | 12% | Formula( II ),$R_2$ is methylene | 1.00% | 2 | 1.2 | 87.30 | 92.80 | 23.00 | 16.10 |
| Embodiment 20 | R is K, $R_1$ is methyl | 0.70% | $LiPF_6$ | 12% | Formula( II ),$R_2$ is methylene | 1.40% | 2 | 1.2 | 87.50 | 93.10 | 22.80 | 16.20 |
| Embodiment 21 | R is K, $R_1$ is methyl | 0.70% | $LiPF_6$ | 12% | Formula( II ),$R_2$ is methylene | 2.10% | 2 | 1.2 | 86.40 | 91.40 | 21.70 | 19.90 |
| Embodiment 22 | R is K, $R_1$ is methyl | 0.70% | $LiPF_6$ | 12% | Formula( II ),$R_2$ is methylene | 4.00% | 2 | 1.2 | 85.90 | 91.90 | 20.90 | 21.10 |
| Embodiment 23 | R is Na, $R_1$ is methyl | 0.70% | $LiPF_6$ | 12% | Formula( III ),$R_2$ is methylene | 1.40% | 2 | 1.2 | 87.3 | 93.2 | 23.1 | 16.5 |
| Embodiment 24 | R is K, $R_1$ is ethyl | 0.70% | $LiPF_6$ | 12% | Formula(III),$R_2$ is carbon atom | 1.40% | 2 | 1.2 | 87.2 | 93.1 | 23.2 | 16.6 |
| Embodiment 25 | R is Li, $R_1$ is ethyl | 0.70% | $LiPF_6$ | 12% | Formula( IV),$R_2$ is methylene | 1.40% | 2 | 1.2 | 87.3 | 93 | 23.1 | 16.1 |
| | | | | | | | | | | | | |
| Comparative Embodiment 1 | R is K, $R_1$ is methyl | 0.70% | $LiPF_6$ | 12% | / | / | 0.05 | 1.2 | 77.1 | 78.9 | 28.9 | 22.9 |
| Comparative Embodiment 2 | R is K, $R_1$ is methyl | 0.70% | $LiPF_6$ | 12% | / | / | 12 | 1.2 | 76.1 | 77.2 | 27.8 | 22.7 |

Embodiments 1-5 and Comparative Embodiments 1-2 show the effects of the ratio of the percentage mass content of the additives of formula (I) to the specific surface area of the negative electrode active material on the performance of the lithium-ion battery. When the ratio of $W_0/X_1$ is very large, the content of the additives of formula (I) in the electrolyte solution is relatively very high, and a specific surface area of the negative electrode is relatively small, thereby resulting in formation of a very thick protective film on a surface of the negative electrode, causing difficulties in lithium ion transmission, and failing to contribute to improvement of power performance and cycling performance of the battery. When the ratio of $W_0/X_1$ is very small, the content of the additives of formula (I) in the electrolyte solution is very low, such that the surface of the negative electrode of the lithium-ion battery is not enough to form a homogeneous and stable interfacial film, the negative electrode is less sufficiently protected, it is difficult to inhibit reduction of the solvent on the surface of the negative electrode, and it is also impossible to effectively improve the power performance and cycling performance of the lithium-ion battery.

Embodiments 3 and 6-9 show the effects of the ratio of the specific surface area of the positive electrode active material of the lithium-ion battery to the percentage mass content of the additives in formula (I) on the performance of the lithium-ion battery. When $X_2/W_0$ is very large, there is a relatively large amount of the positive electrode active material, and the content of the additives of formula (I) is relatively low. **In** this case, a reaction interface of the positive electrode is large, and consumption of the additives of formula (I) is large, such that too many additives of formula (I) are consumed on a surface of the positive electrode, which is not beneficial for a film-forming reaction of the additives at the negative electrode. When $X_2/W_0$ is very small, there is a relatively small amount of the positive electrode active material, and the content of the additives of formula (I) is relatively high. Since the additives of formula (I) themselves are weakly resistant to oxidation, excessive additives of formula (I) will have adverse effects on viscosity and conductivity of the electrolyte solution, as well as storage performance and power performance of the lithium-ion battery.

Embodiments 3 and 10-13 show the effects of the percentage mass content of the additives of formula (I) on the performance of the lithium-ion battery. When an addition amount of the additives shown in formula (I) in the electrolyte solution is very small, it is not enough to form a stable interfacial film on the surface of the negative electrode of the lithium-ion battery; when the addition amount of the additives shown in formula (I) in the electrolyte solution is very large, gas production of the lithium-ion battery can be aggravated to a certain extent; and moreover, the additives shown in formula (I) will also increase the viscosity of the electrolyte solution, thereby affecting the conductivity of the electrolyte solution. When the percentage mass content $W_0$% of the additives shown in formula (I) in the electrolyte solution is from 0.1% to 2%, and optionally, when $W_0$% is from 0.3% to 1%, the additives are substantially first consumed at the negative electrode of the lithium-ion battery, and are enough to form a homogeneous and stable interfacial film, to protect the negative electrode, fully function to improve the cycling performance and power performance of the lithium-ion battery; and have no obvious adverse effects on the conductivity of the electrolyte solution.

Embodiments 3 and 14-17 show the effects of the percentage mass content of the electrolyte lithium salt in the electrolyte solution on the performance of the lithium-ion battery. The addition of the additives of formula (I) somewhat increases the viscosity of the electrolyte solution, which is not beneficial for the conductivity of the electrolyte solution, and can further affect dynamic characteristics of the lithium-ion battery. The electrolyte lithium salt in the electrolyte solution can improve the conductivity of the electrolyte solution, and can reduce concentration polarization. The percentage mass content of the electrolyte lithium salt in the electrolyte solution in Embodiments 3 and 16-17 is within a reasonable range, such that the power performance and cycling performance of the lithium-ion battery are also favorable.

Embodiments 18-22 show the effects of the percentage mass content of the positive electrode sacrificing additive in the electrode solution on the performance of the lithium-ion battery. The additives of formula (I) can priorly form a film on the surface of the negative electrode of the lithium-ion battery, thereby improving the power performance, cycling performance, and service life of the battery. However, the additives will aggravate gas production during storage to a certain extent. The addition of the positive electrode sacrificing additive can just make up for the above defects of the additives of formula (I) by priorly forming a film on the surface of the positive electrode, thereby improving the gas production during storage of the lithium-ion battery. The content of the positive electrode sacrificing additive in Embodiments 19-29 in a favorable range can guarantee favorable cycling performance, power performance and storage performance of the lithium-ion battery.

Embodiments 23-25 show examples of using the additives of formula (I) with different specific structures and the positive electrode sacrificing additive within the scope provided in the present application. These examples show that these additives of formula (I) with different specific structures and the positive electrode sacrificing additive can achieve technical effects of the present application.

According to the disclosure and teachings in the above specification, those skilled in the art can further make alterations and modifications to the above embodiments. Therefore, the present application is not limited to the specific embodiments disclosed and described above. In addition, although some specific terms are used in the present specification, these terms are provided merely for ease of description, and do not constitute any limitation to the present application.

## Claims

**1.** A lithium-ion battery (5), comprising a positive electrode sheet, a negative electrode sheet, a separator between the positive electrode sheet and the negative electrode sheet, and an electrolyte solution, wherein

the electrolyte solution comprises an organic solvent, an electrolyte lithium salt dissolved in the organic solvent, and one or more of additives shown in formula (I),

(I)

wherein R is selected from the group consisting of K, Li, Na, Rb, or Cs, and $R_1$ is selected from C1-C10 alkyl; a percentage mass content of the additives shown in formula (I) in the electrolyte solution is denoted as $W_0$%; and the negative electrode sheet comprises a negative electrode current collector and a negative electrode active material layer arranged on at least one surface of the negative electrode current collector, and a specific surface area of a negative electrode active material in the negative electrode active material layer is denoted as $X_1$, in

$m^2/g$; satisfying: $W_0/X_1$=0.1-10; and optionally, $W_0/X_1$=0.2-4.

**2.** The lithium-ion battery (5) according to claim 1, wherein the positive electrode sheet comprises a positive electrode current collector and a positive electrode active material layer arranged on at least one surface of the positive electrode current collector, and a specific surface area of a positive electrode active material in the positive electrode active material layer is denoted as $X_2$, in $m^2/g$, satisfying:
$X_2/W_0$=0.4-5; and optionally, $X_2/W_0$=0.6-3.

**3.** The lithium-ion battery (5) according to claim 1 or 2, wherein the percentage mass content $W_0$% of the additives shown in formula (I) in the electrolyte solution is from 0.1% to 2%, and optionally, $W_0$% is from 0.3% to 1%.

**4.** The lithium-ion battery (5) according to any one of claims 1 to 3, wherein the R is K, and the $R_1$ is methyl.

**5.** The lithium-ion battery (5) according to any one of claims 1 to 4, wherein a percentage mass content of the electrolyte lithium salt in the electrolyte solution is denoted as $W_1$%, satisfying: $W_1\% \geq 5W_0$.

**6.** The lithium-ion battery (5) according to any one of claims 1 to 5, wherein the percentage mass content $W_1$% of the electrolyte lithium salt in the electrolyte solution is from 10% to 15%.

**7.** The lithium-ion battery (5) according to any one of claims 1 to 6, wherein the electrolyte solution further comprises a positive electrode sacrificing additive, an oxidation potential of the positive electrode sacrificing additive is lower than 4.5 V; and optionally, the oxidation potential of the positive electrode sacrificing additive is lower than 4.3 V.

**8.** The lithium-ion battery (5) according to claim 7, wherein the positive electrode sacrificing additive is selected from compounds shown in one of formula (II) to formula (IV):

O
S
O
R2
(II)
,
(III)
, or
(IV)


wherein $R_2$ is selected from a carbon atom or alkylene substituted with C1-C9 alkyl.

**9.** The lithium-ion battery (5) according to claim 7 or 8, wherein a percentage mass content of the positive electrode sacrificing additive in the electrolyte solution is denoted as $W_2$%, satisfying: $0.5 \leq W_2 \leq 4$;

optionally, $W_2 \leq 3W_0$; and
further optionally, $W_2 \leq 2W_0$.

**10.** A battery module (4), comprising the lithium-ion battery (5) according to any one of claims 1 to 9.

**11.** A battery pack (1), comprising the lithium-ion battery (5) according to any one of claims 1 to 9 or the battery module (4) according to claim 10.

**12.** An electrical apparatus, comprising the lithium-ion battery (5) according to any one of claims 1 to 9, or the battery module (4) according to claim 10, or the battery pack (1) according to claim 11, the lithium-ion battery (5) or the battery module (4) or the battery pack (1) serving as a power source of the electrical apparatus or an energy storage unit of the electrical apparatus.

## Patentansprüche

**1.** Lithium-Ionen-Batterie (5), umfassend eine positive Elektrodenplatte, eine negative Elektrodenplatte, einen Separator zwischen der positiven Elektrodenplatte und der negativen Elektrodenplatte und eine Elektrolytlösung, wobei

die Elektrolytlösung ein organisches Lösungsmittel, ein Elektrolyt-Lithiumsalz, das in dem organischen Lösungsmittel gelöst ist, und einen oder mehrere von in Formel (I) gezeigten Additiven umfasst,

(I)

wobei R aus der Gruppe bestehend aus K, Li, Na, Rb oder Cs ausgewählt ist und $R_1$ aus C1-C10-Alkyl ausgewählt ist;

ein prozentualer Massenanteil der in Formel (I) gezeigten Additive in der Elektrolytlösung als $W_0$% bezeichnet wird; und

die negative Elektrodenplatte einen Negativelektrodenstromsammler und eine auf mindestens einer Oberfläche des Negativelektrodenstromsammlers angeordnete Schicht aus aktivem Material für die negative Elektrode umfasst, und eine spezifische Oberfläche eines aktiven Materials für die negative Elektrode in der Schicht aus aktivem Material für die negative Elektrode als $X_1$ in $m^2/g$ bezeichnet wird; wobei Folgendes erfüllt ist: $W_0/X_1$ = 0,1-10; und optional $W_0/X_1$ = 0,2-4.

**2.** Lithium-Ionen-Batterie (5) nach Anspruch 1, wobei die positive Elektrodenplatte einen Positivelektrodenstromsammler und eine auf mindestens einer Oberfläche des Positivelektrodenstromsammlers angeordnete Schicht aus aktivem Material für die positive Elektrode umfasst, und eine spezifische Oberfläche eines aktiven Materials für die positive Elektrode in der Schicht aus aktivem Material für die positive Elektrode als $X_2$ in $m^2/g$ bezeichnet wird; wobei Folgendes erfüllt ist:
$X_2/W_0$ = 0,4-5; und optional $X_2/W_0$ = 0,6-3.

**3.** Lithium-Ionen-Batterie (5) nach Anspruch 1 oder 2, wobei der prozentuale Massenanteil $W_0$% der in Formel (I) gezeigten Additive in der Elektrolytlösung 0,1 % bis 2 % beträgt und optional $W_0$% 0,3 % bis 1 % beträgt.

**4.** Lithium-Ionen-Batterie (5) nach einem der Ansprüche 1 bis 3, wobei R K ist steht und $R_1$ Methyl ist.

**5.** Lithium-Ionen-Batterie (5) nach einem der Ansprüche 1 bis 4, wobei ein prozentualer Massenanteil des Elektrolyt-Lithiumsalzes in der Elektrolytlösung als $W_1$% bezeichnet wird, wobei Folgendes erfüllt ist: $W_1\% \geq 5W_0$.

**6.** Lithium-Ionen-Batterie (5) nach einem der Ansprüche 1 bis 5, wobei der prozentuale Massenanteil $W_1$% des Elektrolyt-Lithiumsalzes in der Elektrolytlösung 10 % bis 15 % beträgt.

**7.** Lithium-Ionen-Batterie (5) nach einem der Ansprüche 1 bis 6, wobei die Elektrolytlösung ferner ein Opferadditiv für die positive Elektrode umfasst, wobei ein Oxidationspotential des Opferadditivs für die positive Elektrode niedriger als 4,5 V ist; und optional das Oxidationspotential des Opferadditivs für die positive Elektrode niedriger als 4,3 V ist.

**8.** Lithium-Ionen-Batterie (5) nach Anspruch 7, wobei das Opferadditiv für die positive Elektrode aus Verbindungen ausgewählt ist, die in einer von Formel (II) bis Formel (IV) gezeigt sind:

(II)
,
(III)
oder
(IV)

wobei $R_2$ aus einem Kohlenstoffatom oder einem mit C1-C9-Alkyl substituierten Alkylen ausgewählt ist.

**9.** Lithium-Ionen-Batterie (5) nach Anspruch 7 oder 8, wobei ein prozentualer Massenanteil des Opferadditivs für die positive Elektrode in der Elektrolytlösung als $W_2$% bezeichnet wird, wobei Folgendes erfüllt ist: $0{,}5 \leq W_2 \leq 4$;

optional, $W_2 \leq 3W_0$; und
ferner optional, $W_2 \leq 2W_0$.

**10.** Batteriemodul (4), umfassend die Lithium-Ionen-Batterie (5) nach einem der Ansprüche 1 bis 9.

**11.** Batteriepack (1), umfassend die Lithium-Ionen-Batterie (5) nach einem der Ansprüche 1 bis 9 oder das Batteriemodul (4) nach Anspruch 10.

**12.** Elektrische Einrichtung, umfassend die Lithium-Ionen-Batterie (5) nach einem der Ansprüche 1 bis 9 oder das Batteriemodul (4) nach Anspruch 10 oder das Batteriepack (1) nach Anspruch 11, wobei die Lithium-Ionen-Batterie (5) oder das Batteriemodul (4) oder das Batteriepack (1) als Stromquelle der elektrischen Einrichtung oder als Energiespeichereinheit der elektrischen Einrichtung dient.

## Revendications

**1.** Batterie lithium-ion (5), comprenant une feuille d'électrode positive, une feuille d'électrode négative, un séparateur entre la feuille d'électrode positive et la feuille d'électrode négative, et une solution d'électrolyte, dans laquelle

la solution d'électrolyte comprend un solvant organique, un sel de lithium d'électrolyte dissous dans le solvant organique, et un ou plusieurs additifs représentés par la formule (I),

(I)

dans laquelle R est choisi dans le groupe constitué par K, Li, Na, Rb ou Cs, et $R_1$ est choisi parmi un alkyle en C1-C10 ;
un pourcentage massique des additifs représentés par la formule (I) dans la solution d'électrolyte est noté $W_0$% ; et
la feuille d'électrode négative comprend un collecteur de courant d'électrode négative et une couche de matériau actif d'électrode négative agencée sur au moins une surface du collecteur de courant d'électrode négative, et une surface spécifique d'un matériau actif d'électrode négative dans la couche de matériau actif d'électrode négative est notée $X_1$, en $m^2/g$; satisfaisant : $W_0/X_1$ = 0,1-10 ; et éventuellement, $W_0/X_1$ = 0,2-4.

**2.** Batterie lithium-ion (5) selon la revendication 1, dans laquelle la feuille d'électrode positive comprend un collecteur de courant d'électrode positive et une couche de matériau actif d'électrode positive agencée sur au moins une surface du collecteur de courant d'électrode positive, et une surface spécifique d'un matériau actif d'électrode positive dans la couche de matériau actif d'électrode positive est notée $X_2$, en $m^2/g$, satisfaisant :
$X_2/W_0$ = *0,4-5* ; et éventuellement, $X_2/W_0$ = 0,6-3.

**3.** Batterie lithium-ion (5) selon la revendication 1 ou 2, dans laquelle le pourcentage massique $W_0$% des additifs représentés par la formule (I) dans la solution d'électrolyte est de 0,1 % à 2 %, et éventuellement, $W_0$% est de 0,3 % à 1 %.

**4.** Batterie lithium-ion (5) selon l'une quelconque des revendications 1 à 3, dans laquelle R est K, et $R_1$ est un méthyle.

**5.** Batterie lithium-ion (5) selon l'une quelconque des revendications 1 à 4, dans laquelle un pourcentage massique du sel de lithium d'électrolyte dans la solution d'électrolyte est noté $W_1$%, et satisfait : $W_1\% \geq 5W_0$.

**6.** Batterie lithium-ion (5) selon l'une quelconque des revendications 1 à 5, dans laquelle le pourcentage massique $W_1$% du sel de lithium d'électrolyte dans la solution d'électrolyte est de 10 % à 15 %.

**7.** Batterie lithium-ion (5) selon l'une quelconque des revendications 1 à 6, dans laquelle la solution d'électrolyte comprend en outre un additif sacrificiel d'électrode positive, un potentiel d'oxydation de l'additif sacrificiel d'électrode

positive est inférieur à 4,5 V ; et éventuellement, le potentiel d'oxydation de l'additif sacrificiel d'électrode positive est inférieur à 4,3 V.

**8.** Batterie lithium-ion (5) selon la revendication 7, dans laquelle l'additif sacrificiel d'électrode positive est choisi parmi des composés représentés par l'une des formules (II) à (IV) :

(II)
,
(III)
ou
(IV)

dans lesquelles $R_2$ est choisi parmi un atome de carbone ou un alkylène substitué par un alkyle en C1-C9.

**9.** Batterie lithium-ion (5) selon la revendication 7 ou 8, dans laquelle un pourcentage massique de l'additif sacrificiel d'électrode positive dans la solution d'électrolyte est noté $W_2$%, et satisfait : $0,5 \leq W_2 \leq 4$ ;

éventuellement, $W_2 \leq 3W_0$ ; et
encore éventuellement, $W_2 \leq 2W_0$.

**10.** Module de batterie (4), comprenant la batterie lithium-ion (5) selon l'une quelconque des revendications 1 à 9.

**11.** Bloc-batterie (1), comprenant la batterie lithium-ion (5) selon l'une quelconque des revendications 1 à 9 ou le module de batterie (4) selon la revendication 10.

**12.** Appareil électrique, comprenant la batterie lithium-ion (5) selon l'une quelconque des revendications 1 à 9, ou le module de batterie (4) selon la revendication 10, ou le bloc-batterie (1) selon la revendication 11, la batterie lithium-ion (5) ou le module de batterie (4) ou le bloc-batterie (1) servant de source d'énergie de l'appareil électrique ou d'unité de stockage d'énergie de l'appareil électrique.

0
-0.2
-0.4
-0.6
-0.8
-1
0.5
1
1.5
2
2.5
3
Current / mA
Voltage Vs Li⁺/Li

FIG. 1

0
-0.2
-0.4
-0.6
-0.8
-1
0.5
1
1.5
2
2.5
3
Current / mA
Voltage Vs Li⁺/Li

FIG. 2

0.000010
0.000008
0.000006
0.000004
0.000002
0.000000
Current/A
3
3.5
4
4.5
5
5.5
6
6.5
7
7.5
Voltage Vs Li+/Li

FIG. 3

0.000010
0.000008
0.000006
0.000004
0.000002
0.000000
Current/A
3
3.5
4
4.5
5
5.5
6
6.5
7
7.5
Voltage Vs Li+/Li

FIG. 4

5

FIG. 5

5
53
52
52
51

FIG. 6

4
5
5
5

FIG. 7

1

FIG. 8

1
2
4
4
4
4
4
4
3

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111159457
- CN 111934014 A
- CN 111333595 A
- US 2016126592 A1
- CN 113363580 A
- CN 113437363 A
- CN 108140890 A
- US 2020303767 A1
- CN 112151749 A
- CN 111628218 A